# FASCICULE DE BREVET EUROPEEN

(11) **EP 1 572 585 B1**
(45) Date de publication et mention de la délivrance du brevet: **22.05.2019**
(21) Numéro de dépôt: 03809985.9
(22) Date de dépôt: 15.12.2003
(51) Int. Cl.: C01B 25/45, H01M 4/13, H01M 4/36, H01M 4/485, H01M 4/58, H01M 10/0525, H01M 4/131, H01M 4/136, H01M 4/1397, H01M 4/525

(54) **PROCEDE DE PREPARATION DE COMPOSES D'INSERTION D'UN METAL ALCALIN, MATERIAUX ACTIFS LES CONTENANT, ET DISPOSITIFS COMPRENANT CES MATERIAUX ACTIFS**
VERFAHREN ZUR HERSTELLUNG VON ALKALIMETALLEINLAGERUNGSVERBINDUNGEN, AKTIVE MATERIALIEN DIESE ENTHALTEND UND VORRICHTUNG DIE AKTIVEN VERBINDUNGEN ENTHALTEND
METHOD FOR PREPARING INSERTION COMPOUNDS OF AN ALKALI METAL, ACTIVE MATERIALS CONTAINING SAME, AND DEVICE COMPRISING SAID ACTIVE MATERIALS

(30) Priorité: 16.12.2002 FR 0215915
(43) Date de publication de la demande: 14.09.2005
(73) Titulaire: Commissariat à l'Énergie Atomique et aux Énergies Alternatives, 75015 Paris (FR)
(72) Inventeur: FRANGER, Sylvain, F-91190 Gif-usr-Yvette (FR); MARTINET, Sébastien, F-38000 Grenoble (FR); LE CRAS, Frédéric, F-38470 Notre Dame de l'Osier (FR); BOURBON, Carole, F-38590 Saint-Michel de Saint-Geoirs (FR)
(74) Mandataire: Ahner, Philippe
(86) Numéro de dépôt international: PCT/FR2003/050172
(87) Numéro de publication internationale: WO 2004/056702

(56) Documents cités:
- S. FRANGER, F. LE CRAS, C. BOURBON: "Comparison of Different LiFePO4 Synthesis Routes and their Influence on its Physico-Chemical Properties" 11TH INTERNATIONAL MEETING ON LITHIUM BATTERIES (IMLB-11), 22 juin 2002 (2002-06-22), - 28 juin 2002 (2002-06-28) XP002266495 MONTEREY, USA & S. FRANGER, F. LE CRAS, C. BOURBON, H. ROUALT: "Comparisation between different LiFePO4 synthesis routes and their influence on its physico-chemical properties" J. POWER SOURCES, vol. 119-121, 2003, pages 252-257,
- YAMADA A ET AL: "Optimized LiFePO4 for lithium battery cathodes" JOURNAL OF THE ELECTROCHEMICAL SOCIETY, ELECTROCHEMICAL SOCIETY. MANCHESTER, NEW HAMPSHIRE, US, vol. 148, no. 3, 2001, pages A224-A229, XP002235418 ISSN: 0013-4651 cité dans la demande
- Y. SHOUFENG, P.Y. ZAVALIJ, M.S. WHITTINGHAM: "Hydrothermal synthesis of lithium iron phosphate cathodes" ELECTROCHEMISTRY COMMUNICATIONS, vol. 3, 2001, pages 505-508, XP002266496 cité dans la demande

## Description

La présente invention concerne un procédé de préparation de composés d'insertion d'un ion alcalin, tel que l'ion lithium, plus précisément de composés d'insertion d'un ion alcalin à structure polyanionique.

L'invention a également trait aux composés d'insertion, notamment au lithium, ainsi obtenus.

L'invention est relative, en outre, aux matériaux actifs contenant lesdits composés d'insertion, tels que des matériaux actifs d'électrode positive.

Enfin, l'invention concerne les dispositifs contenant lesdits composés et/ou matériaux actifs, comme par exemple les dispositifs électrochromes et les accumulateurs ou batteries.

Les accumulateurs au lithium sont de plus en plus utilisés comme sources d'énergie autonomes, en particulier, dans les équipements portables, tels que les ordinateurs, les téléphones, les assistants personnels, les caméscopes, etc., où ils tendent à remplacer progressivement les accumulateurs nickel-cadmium (NiCd) et nickel-hydrure métallique (NiMH). Cette évolution découle du fait que les performances des accumulateurs au lithium en termes de densité d'énergie (Wh/kg, Wh/l) sont largement supérieures à celles des deux filières citées précédemment.

Les composés actifs d'électrodes utilisés dans ces accumulateurs sont principalement LiCoO₂, LiNiO₂ et LiMn₂O₄ pour l'électrode positive et du carbone, tel que du graphite ou du coke, etc., pour l'électrode négative. Les capacités théoriques et pratiques de ces composés sont respectivement de 275 mAh/g et 140 mAh/g pour LiCoO₂ et LiNiO₂, et de 148 mAh/g et 120 mAh/g pour LiMn₂O₄, pour une tension de fonctionnement par rapport au lithium métallique voisine de 4 volts.

La plupart des systèmes d'accumulateurs actuellement commercialisés utilisent ainsi le couple LiCoO₂/C, mais il se pose de nombreux problèmes de coût et de toxicité qui sont liés à l'élément cobalt, et des problèmes de sécurité intrinsèque du système liés à l' instabilité et/ou la réactivité de Li₁₋ₓCOₓO₂, vis-à-vis de l'électrolyte utilisé.

De la même manière, les oxydes de nickel posent des difficultés importantes, de nouveau à cause de leur toxicité élevée.

Les oxydes de manganèse, quant à eux, et particulièrement la famille de structure spinelle Li₁₊ₓMn₂₋ₓO₄ (0 ≤ x ≤ 0,33), sont en mesure de démontrer des performances électrochimiques comparables à celles des oxydes de cobalt et de nickel. Il apparaît de plus que la plus grande abondance naturelle du manganèse et la plus faible toxicité de ses oxydes par rapport au cobalt et au nickel sont un avantage important pour leur large utilisation dans les accumulateurs.

Dans le cas particulier de LiMn₂O₄, il est néanmoins établi que son usage combiné avec des électrolytes formulés pour un fonctionnement au voisinage de 4 volts par rapport au lithium métallique qui contiennent de l'hexafluorophosphate de lithium débouche sur une dissolution progressive de l'oxyde de manganèse et par voie de conséquence sur une durée de vie plus réduite de l'accumulateur.

Deux familles de composés utilisés pour les réactions électrochimiques sont, d'une part, la famille isotype de l'olivine et, d'autre part, la famille du Nasicon ; rappelons que la dénomination Nasicon signifie sodium (Na) superionic conductor et que ce composé répond à la formule NaₓM₂X₃O₁₂. Ces deux familles sont constituées d'éléments équivalents et se différencient uniquement par le rapport nombre de polyanions/nombre de lithium et par leur structure cristalline. En effet, la famille isotype de l'olivine a une maille cristalline orthorhombique et la famille isotype du Nasicon de formule AₓM₂X₃O₁₂ a une maille rhombohédrique.

Des matériaux de structure isotype de l'olivine à maille cristalline orthorhombique, tel que Li₁₋ₓFeₓPO₄, par exemple LiFePO₄ (triphylite) ont l'avantage d'être potentiellement peu coûteux et non toxiques. Dans le cas de LiFePO₄, l'insertion/extraction du lithium se déroule selon un processus biphasé à 3,45 V/Li+/Li, ce qui rend ce composé stable dans la quasi-totalité des solvants organiques. De plus, il se révèle bien plus stable à l'état chargé (« FeP0₄ ») en présence d'électrolyte que les oxydes précédemment cités, induisant une grande sûreté d'utilisation dans les accumulateurs.

Cependant, le problème majeur de cette famille de composés est leurs faibles conductivités électronique et ionique à température ambiante. Ainsi, ceci limite la cinétique d'insertion/désinsertion du lithium au sein de la structure hôte et l'utilisation de ces composés à des régimes de charge/décharge relativement faibles.

Par ailleurs, les composés de structure Nasicon, c'est-à-dire de formule AₓM₂(XO₄)₃ où A est un métal alcalin, M est un métal de transition et X représente Si, P, S, Mo ou Ge, présentent également un intérêt en tant que matériau actif d'électrode positive, en particulier grâce à leur conductivité ionique des ions lithium élevée. Mais, de même, que les composés de structure olivine, ils sont de mauvais conducteurs électroniques, ce qui limite leur usage.

En outre, du fait de leur mauvaise cinétique électrochimique, les composés de la famille de l'olivine, tel que LiFePO₄, ne peuvent être utilisés comme matériaux actifs dans un dispositif électrochrome.

Historiquement et dans la littérature, par exemple dans le document de A. YAMADA et al. « Optimized LiFePO4 for lithium battery cathodes », Journal of the Electrochemical Society, 148(3) A224-A229 (2001), et dans le document de S. YANG et al « Hydrothermal synthesis of lithium iron phosphate cathodes », Electrochemistry Communications 3(2001), 505-508, les procédés de synthèse permettant, de manière générale, d'obtenir les composés de formule LiMXO₄, dans laquelle M représente un métal de transition ou un mélange de métaux de transition, et X représente P, Si, S, Al, Ge ou As, etc., sont des procédés utilisant des réactifs exclusivement à l'état solide et mettant en jeu des températures élevées, à savoir généralement supérieures à 600°C.

Ces procédés comportent de nombreux défauts, aussi bien en ce qui concerne les réactifs utilisés, que les conditions de leur mise en oeuvre et que les produits obtenus.

Ainsi, les réactifs utilisés dans ces procédés de synthèse, tels que Li₂CO₃, (NH₄)ₐ(XO₄)_{b} et les sels du métal M²⁺ présentent plusieurs inconvénients : ils rejettent des gaz nocifs, tels que NOₓ et NH₃, lors de leur dégradation thermique et ils nécessitent l'emploi d'une atmosphère inerte, par exemple d'argon ou d'azote, en particulier lorsque M = Fe, afin de conserver le degré d'oxydation (+II), ce qui rend leur manipulation extrêmement contraignante.

La synthèse est longue - sa durée peut dépasser 24 heures - et est réalisée dans des conditions que l'on peut qualifier de sévères au niveau, en particulier, de la température qui est extrêmement élevée. En outre, des sous-produits toxiques peuvent être formés lors de la synthèse.

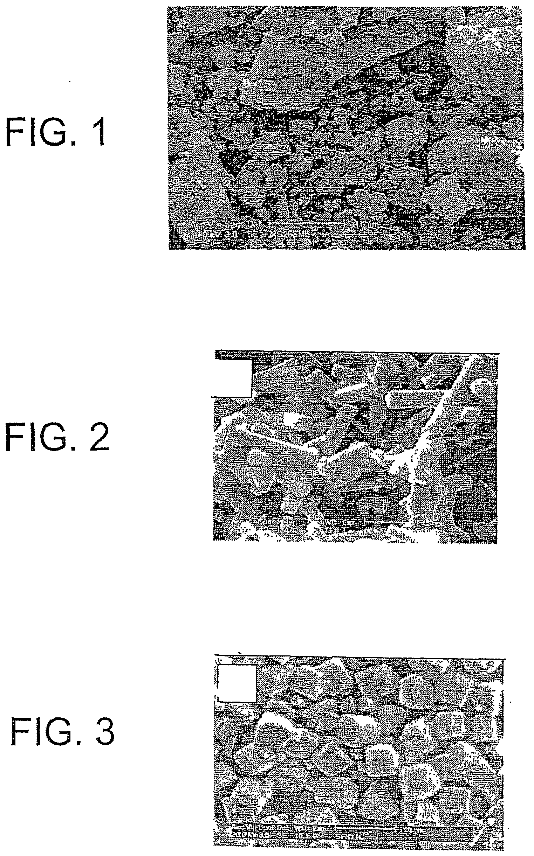

Enfin, ces procédés, dits « de synthèse tout solide », conduisent à des produits finaux, par exemple du LiFePO₄, sous la forme de particules dont la morphologie n'est absolument pas homogène, aussi bien quant à leur forme que quant à leur taille, comme cela est montré sur la figure 1 ou des agglomérats de LiFePO₄ sont nettement visibles.

Cette hétérogénéité de la morphologie du produit fait que ses propriétés, en tant que matériau cathodique, ne sont pas bonnes, et que, par voie de conséquence, les performances des accumulateurs qui mettent en oeuvre ces composés ne sont pas satisfaisantes.

De plus, les composés synthétisés par les procédés de l'art antérieur ne sont pas d'une grande pureté, et ils nécessitent souvent une étape supplémentaire de purification avant leur utilisation, par exemple avant leur intégration dans l'électrode positive d'un accumulateur.

Notamment dans le cas de LiFePO₄, les composés obtenus par la voie de synthèse « tout solide », mènent à des teneurs en Fe³⁺ élevées, préjudiciables à la capacité spécifique du matériau.

L'inhomogénéité des particules engendre nécessairement une dispersion de réponse des particules, ce qui pose des problèmes de gestion de l'état de charges des accumulateurs.

La présence de l'impureté Fe⁺⁺⁺ est préjudiciable à la capacité, puisque seul le Fe⁺⁺ participe à la réaction électrochimique.

Le document de S FRANGER, F. LE CRAS, et C. BOURBON : « Comparison of Différent LiFePO4 Synthesis Routes and their Influence on its Physico-Chemical Properties. », 11th International Meeting on Lithium Batteries (IMLB-11), 22 Juin 2002 - 28 Juin 2002, XP002266495, Monterey, États-Unis d'Amérique, Poster Session 1 - Cathodes, Poster 129, mentionne que la synthèse hydrothermale est une voie optimale pour former des particules de LiFePO₄ pures, bien cristallisées, et de petites tailles dans certaines conditions de réactifs et de refroidissement. Les conditions exactes de la synthèse hydrothermale et les réactifs utilisés ne sont absolument pas décrits.

Il existe donc un besoin pour un procédé de préparation de composé d'insertion d'un métal alcalin qui soit simple, rapide, sûr, fiable, « propre », peu coûteux, qui mette en oeuvre des produits de départ non toxiques, qui génère peu de sous-produits et de déchets, éventuellement nocifs.

Il existe encore un besoin pour un procédé de préparation de composés d'insertion d'un métal alcalin, qui donne des produits finaux d'une grande pureté, de morphologie parfaitement contrôlée et homogène, qui présentent d'excellentes propriétés de cinétique électrochimique et des conductivités électronique et ionique élevées, et qui puissent être utilisés à des régimes de charge/décharge élevés.

En d'autres termes, il existe un besoin pour un composé d'insertion d'un métal alcalin, tel que le lithium, qui donne des résultats en matière de réaction chimique excellents et, par voie de conséquence, qui possède des propriétés excellentes en tant que matériau cathodique dans un accumulateur.

Ces propriétés doivent aller de pair, en particulier avec un faible coût, une faible toxicité, une grande stabilité dans les solvants organiques et électrolytes, permettant la mise en oeuvre de ces composés d'insertion sur une longue durée et avec une grande fiabilité dans des dispositifs, tels que les accumulateurs et les dispositifs électrochromes.

Le but de la présente invention est de fournir un procédé de préparation d'un composé d'insertion d'un métal alcalin, tel que le lithium, qui réponde aux besoins indiqués ci-dessus.

Le but de la présente invention est encore de fournir un procédé de préparation d'un composé d'insertion d'un métal alcalin, tel que le lithium, qui ne présente pas les inconvénients, défauts, limitations et désavantages des procédés de l'art antérieur et qui résolve les problèmes des procédés de l'art antérieur.

Ce but et d'autres encore sont atteints, conformément à l'invention, par un procédé de préparation d'un composé d'insertion d'un métal alcalin, dans lequel on réalise les étapes successives suivantes :
a) on met en contact un complexe organique d'un métal de transition ou d'un mélange de métaux de transition M dans un état d'oxydation supérieur à 2, avec un métal alcalin A sous forme ionique, et avec une espèce de formule H_{b}(XO₄), où X est choisi parmi Si, S, Al, P, Ge, As, Mo, et b vaut de 0 à 5, dans un milieu liquide dans une enceinte fermée ; on porte l'enceinte à une température T qui permet la décomposition du complexe organique dans ledit milieu liquide ;
b) on ramène la température et la pression dans l'enceinte jusqu'à la température ambiante et la pression atmosphérique et l'on récupère le composé d'insertion d'un métal alcalin de formule AMXO₄, dans laquelle M est à l'état d'oxydation +2.

Le procédé selon l'invention comprend une succession spécifique d'étapes spécifiques.

Le procédé selon l'invention est fondamentalement différent des procédés de l'art antérieur, aussi bien en ce qui concerne la nature de chacune des étapes que leur succession.

Dans le procédé selon l'invention, la synthèse est réalisée en milieu liquide alors que dans les procédés de l'art antérieur, la synthèse est réalisée en mettant en contact des réactifs solides.

En outre, le procédé selon l'invention met en oeuvre un complexe organique dans lequel le métal est dans un état d'oxydation particulier supérieur à II, par exemple égal à 3 (III).

Le procédé selon l'invention utilise, pour la synthèse, des produits de départ de faible coût et qui sont facilement disponibles dans le commerce.

Ces réactifs ne sont pas toxiques. Ils ne rejettent pas de gaz nocifs et, de ce fait, il n'est pas nécessaire de prévoir une atmosphère inerte d'argon ou d'azote avec toutes les contraintes que cela impose.

Cet avantage, essentiellement lié au fait que dans le complexe organique spécifique mis en oeuvre selon l'invention, le métal M est déjà à un degré d'oxydation, de préférence égal à III, et non à un degré d'oxydation de II, comme dans l'art antérieur, est particulièrement mis en évidence dans le cas où M = Fe.

Selon l'invention, la partie organique du complexe, encore appelé précurseur de M (par exemple, précurseur de Fe) se dégrade sous l'effet de la température et libère des entités extrêmement réductrices qui vont quantativement faire passer l'ensemble du métal M, initialement à un état d'oxydation supérieur à III, par exemple égal à III, à un état d'oxydation égal à II, le métal dans cet état pourra alors réagir avec un métal alcalin sous forme ionique présent dans l'enceinte pour donner le composé final AMXO₄, par exemple LiMXO₄.

Le procédé selon l'invention est rapide, à titre d'exemple, il ne dure généralement que de 2 à 3 heures, alors que les procédés de synthèse par voie solide de l'art antérieur ont une durée généralement supérieure à 24 heures.

Le procédé selon l'invention est un procédé propre, qui, outre l'utilisation de produits de départ non toxiques, ne génère pas de sous-produits toxiques.

Le procédé selon l'invention donne un produit final d'une grande pureté ; supérieure à la pureté des matériaux de l'art antérieur. De ce fait, les composés selon l'invention ne nécessitent aucune étape supplémentaire de purification avant leur utilisation, par exemple avant leur intégration dans le matériau d'électrode positive d'un accumulateur.

Le composé obtenu, grâce à son procédé de préparation, présente une morphologie parfaitement contrôlée, quant à la taille et à la forme des particules qui le constituent. Les particules sont parfaitement homogènes en forme et en taille, au contraire des particules des composés préparés par les procédés de l'art antérieur, notamment par synthèse, dite « tout solide », qui ne sont absolument pas homogènes, qui sont « inhomogènes ».

Ce contrôle de la morphologie, cette homogénéité de la taille et de la forme conduisent à d'excellentes performances pour les accumulateurs intégrant les composés de l'invention, en ce qui concerne la puissance, la stabilité et la sûreté.

L'invention concerne, en outre, un composé d'insertion d'un métal alcalin de formule AM(XO₄), où A est choisi parmi les métaux alcalins, X est choisi parmi Si, S, Al, P, Ge, **As,** et Mo, et M est à l'état d'oxydation +2, caractérisé en ce qu'il présente une teneur en métal (M) à un état d'oxydation supérieur à 2, par exemple en métal M (III) inférieure à 5 % en poids, de préférence inférieure à 1 % en poids ; en ce qu'il se présente sous la forme de particules ou grains ; et en ce que l'écart à la valeur moyenne de la taille des particules est inférieur à 20 %, de préférence inférieur à 10 %, de préférence encore inférieur à 1 %.

L'invention concerne également un matériau actif d'électrode comprenant le matériau selon l'invention, ou préparé par le procédé selon l'invention.

L'invention est aussi relative à une électrode positive comprenant ledit matériau actif à l'accumulateur comprenant ladite électrode et à un dispositif électrochrome comprenant le composé selon l'invention, ou préparé par le procédé selon l'invention.

L'invention sera mieux comprise à la lecture de la description détaillée qui va suivre, donnée à titre illustratif et non limitatif et faite en référence aux dessins joints dans lesquels :
- la figure 1 est une microphotographie réalisée au microscope électronique à balayage de particules de LiFePO₄ préparées par un procédé de l'art antérieur de synthèse « tout solide » à haute température (600°C) ;
- la figure 2 est une microphotographie réalisée au microscope électronique à balayage (MEB), de particules de LiFePO₄ préparées par le procédé selon l'invention (exemple 1) avec un refroidissement linéaire, par inertie du réacteur, du mélange réactionnel. Le repère indiqué représente 20 µm ;
- la figure 3 est une microphotographie réalisée au microscope électronique à balayage (MEB) de particules de LiFePO₄ préparées par le procédé selon l'invention (exemple 1) avec un refroidissement par paliers du mélange réactionnel, le repère indiqué représente 20 µm.

De manière détaillée, le procédé selon l'invention comprend, dans une étape essentielle a), la mise en contact d'un complexe organique d'un métal de transition ou d'un mélange de métaux de transition M dans un état d'oxydation supérieur à 2 avec un métal alcalin A sous forme ionique et avec une espèce H_{b}(XO₄), où X est choisi parmi Si, S, Al, Ge, As, et Mo, et b vaut de 0 à 5, dans un milieu liquide dans une enceinte fermée.

Le métal alcalin A est avantageusement choisi parmi Li et Na, il est de préférence introduit sous la forme d'un sel de métal alcalin de formule AₐH_{b}(XO₄), où a vaut de 1 à 5, par exemple 2. De préférence, X est P. Un sel de métal alcalin AₐH_{b}(XO₄) préféré est Li₂HPO₄,

L'état d'oxydation du métal M est avantageusement de 3 à 5.

De préférence, l'état d'oxydation du métal M est égal à 3 (III).

Le métal M est choisi avantageusement parmi les métaux de transition, tels que Mn, Fe, Ni, Co,... et leurs mélanges.

Par complexe organique, on entend un composé dans lequel le métal M est lié, par exemple par une liaison covalente, ionique ou de coordination à au moins un ligand organique. Ce complexe organique est aussi appelé précurseur du métal M.

Avantageusement, selon l'invention, ledit ligand est choisi parmi les composés organiques de formule : 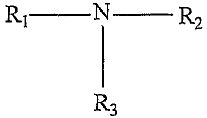 c'est-à-dire parmi les composés organiques comprenant une fonction nitrile. Dans la formule ci-dessus, au moins un parmi R₁, R₂ et R₃ comprend au moins un atome d'oxygène.

R₁, R₂ et R₃ sont indépendamment choisis parmi les radicaux carboxyalkyle (1-4C), par exemple carboxyméthyle, carboxyéthyle, etc.

Un exemple préféré dudit ligand est l'acide nitrilotriacétique de formule N(CH₂CO₂H)₃ ou l'acide éthylènedioxyéthylènedinitriletétraacétique (appelé EGTA) .

Ledit complexe organique est, de préférence, préparé dans une étape préalable à l'étape a), en mettant en contact, dans un milieu liquide, un sel du métal M à l'état d'oxydation supérieur à 2 avec un composé organique.

Ledit composé organique répond de préférence à la formule : 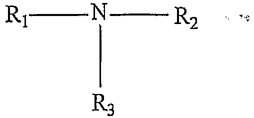 décrite plus haut.

Le sel de métal est avantageusement un sel de métal (III), et ledit métal est, de préférence, le fer. Le sel peut être choisi parmi les sulfates, nitrates, chlorures, acétates, citrates, carboxylates, etc., du métal M, il pourra s'agir avantageusement de sulfate de fer (III).

La mise en contact du composé organique et du sel de métal M est réalisée en milieu liquide à l'instar de l'étape a) du procédé de l'invention. De ce fait, si le procédé selon l'invention comprend, en outre, cette étape préalable de préparation du complexe organique, l'ensemble du procédé sera toujours réalisé en milieu liquide avec tous les avantages présentés par un tel mode de synthèse par rapport aux procédés opérant par voie solide.

Le milieu liquide pour la synthèse du complexe organique est choisi parmi l'eau ; les solvants organiques, tels que les alcanes liquides, par exemple le dodécane, le tributylphosphate (TBP) ; et leurs mélanges.

La mise en contact du sel de métal et du composé organique est généralement réalisée à une température suffisante pour obtenir la décomposition du complexe et la création de radicaux réducteurs.

Par exemple, une solution aqueuse du sel de métal, par exemple de sulfate de fer (III), est portée à ébullition pendant au moins une heure, en présence du composé, agent organique portant une fonction nitrile et comportant au moins un atome d'oxygène, tel que l'acide nitriloacétique.

A l'issue de la réaction, on récupère le complexe organique de métal, par exemple de métal (III) obtenu généralement sous la forme d'un précipité et généralement on le lave et on le sèche.

Dans l'étape a), le complexe organique, qu'il soit préparé ou non lors de l'étape éventuelle préalable décrite ci-dessus, est mis en contact généralement avec un sel de métal alcalin, tel qu'un sel de lithium LiₐH_{b}(XO₄), par exemple Li₂HPO₄.

Cette mise en contact a lieu en milieu liquide. Ledit milieu liquide est généralement le même que celui utilisé pour l'étape préalable éventuelle de synthèse du complexe organique.

Cette mise en contact est réalisée dans une enceinte fermée, dans un vase clos, par exemple dans un réacteur scellé hermétiquement, ou autoclave.

On applique au milieu réactionnel des conditions solvothermales (hydrothermales dans le cas où le solvant est de l'eau), c'est-à-dire que la température de travail est supérieure à la température d'ébullition du solvant. La température est une température qui permet la décomposition du complexe dans le milieu liquide, et du fait que l'on se trouve dans une enceinte fermée la pression n'est pas contrôlée et se déduit de la relation PV = nRT. Dans le cas où le milieu est de l'eau, la pression dans l'autoclave est fixée par la vapeur d'eau (diagramme d'état P, T de l'eau) et atteint à la température de consigne de 200°C, la valeur de 20 bars.

La mise en contact a généralement lieu sous agitation.

Le chauffage est poursuivi pendant une durée de 1 à 10 heures, pendant laquelle la pression et la température décrite ci-dessus sont maintenues. A l'issue de cette durée, on arrête l'agitation et le chauffage et on ramène la température et la pression dans l'enceinte (la température du mélange) jusqu'à la température ambiante et la pression atmosphérique.

Il est à noter que, avantageusement selon l'invention, la morphologie du matériau final obtenu, c'est-à-dire sa taille et sa forme, peut être ajustée selon les conditions du refroidissement : ainsi, un refroidissement lent avec une vitesse de refroidissement, par exemple de 0,5 à 2°C/mn conduira généralement à des particules de produit final d'une taille de 20 à 40 µm.

Une fois que le mélange (le réacteur) est revenu à la température ambiante et à la pression atmosphérique, on ouvre l'enceinte, le réacteur, et on procède à la récupération du produit final, qui est un solide et qui se présente généralement sous la forme de particules, par exemple d'une poudre, généralement précipitée au fond du réacteur.

La récupération est effectuée, par exemple par filtration ou sédimentation.

Le produit récupéré à l'issue de l'étape b) est ensuite généralement lavé, par exemple avec de l'eau désionisée, puis séché, éventuellement sous vide, généralement à une température de 80 à 150°C.

Le produit final, qui est un composé d'insertion d'un métal alcalin, répond à la formule AMXO₄, où A, M et X ont déjà été définis plus haut. AMXO₄ est une écriture globale qui transcrit simplement le fait que cette synthèse conduit à la formation d'un composé polyanionique mixte de métaux alcalins et de métaux de transition. Ce composé de squelette polyanionique appartient aux familles des phosphates, des silicates, des molybdenates, des germanates, des sulfates ou leurs mélanges.

Le composé d'insertion d'un métal alcalin selon l'invention est un produit d'une grande pureté, au contraire des produits similaires obtenus par des procédés de l'art antérieur. Cette pureté est montrée, par exemple, par le diagramme de diffraction des rayons X des poudres qui ne présente aucun pic parasite, quel que soit le mode de refroidissement utilisé.

Cette pureté est démontrée également par les autres analyses physicochimiques, telles que le dosage redox et l'analyse élémentaire.

Le composé selon l'invention a une teneur en métal (M) à un état d'oxydation supérieur à 2 (II), qui est une impureté, par exemple une teneur en métal M (III), tel que Fe (III) inférieure à 5 % en poids, de préférence inférieure à 1 %.

Cette grande pureté est fondamentalement liée aux caractéristiques spécifiques du procédé selon l'invention.

Le produit selon l'invention se présente sous la forme de particules que l'on peut appeler aussi grains, les particules ayant, par exemple, la forme de cylindres, de cubes, de polyèdres, la taille de ces particules ou grains est définie, selon leur géométrie, par leur dimension la plus caractéristique, la plus représentative, ainsi pour des particules en forme de cylindre, la taille sera définie par leur diamètre ou leur longueur. L'ensemble de ces particules peut être défini comme formant une poudre.

Les particules du composé selon l'invention ont, comme on l'a vu, une taille variable, parfaitement contrôlée, grâce au réglage de la vitesse de refroidissement et/ou du profil de celle-ci. Cette taille, par exemple, le diamètre, dans le cas de particules cylindriques est de 0,1 à 50 µm.

Les particules des composés, selon l'invention, du fait des caractéristiques du procédé, ont une morphologie parfaitement contrôlée et sont homogènes, aussi bien au niveau de leur forme que de leur taille.

Cela signifie que par une certaine quantité de particules, les particules qui présentent une déviation par rapport à la forme moyenne, recherchée, sont dans une proportion très faible, par exemple inférieure à 20 %, de préférence inférieure à 10 %, par observation au MEB.

On peut aussi indiquer que les particules selon l'invention, au contraire des particules préparées par les procédés de l'art antérieur (voir, par exemple, la figure 1) ne présentent pas d'agglomérats.

Pour ce qui est de la taille, les particules sont également homogènes, c'est-à-dire que si l'on considère la répartition de la taille des grains obtenus à l'issue du procédé pour une synthèse donnée, l'écart à la valeur moyenne de la taille des particules est inférieur à 20 %, de préférence inférieur à 10 %, de préférence encore inférieur à 1 %.

L'invention concerne, en outre, des matériaux actifs d'électrode, en particulier d'électrode positive contenant un ou plusieurs composés, tels que décrits plus haut.

Dans de tels matériaux actifs d'électrode, en particulier d'électrode positive, les composés selon l'invention peuvent éventuellement être associés à un ou plusieurs autres composés actifs (c'est-à-dire autres que les composés de l'invention), tels que les composés classiques, comme LiCoO₂, LiNiO₂, les oxydes de manganèse, en particulier, de structure spinelle Li₁+xMn₂-_{X}O₄ (avec 0 ≤ x ≤ 0,33), par exemple LiMn₂O₄, les composés de la famille isotype de l'olivine, tels que Li₁₋ₓFeₓPO₄, par exemple LiFePO₄, les composés de la structure du Nasicon, les matériaux d'insertion du lithium du type orthosilicate décrits dans le document US-A-6 085 015, et les matériaux décrits dans le document EP-A2-1 195 825.

L'invention concerne, en outre, une électrode positive comprenant le matériau actif, tel qu'il est décrit plus haut.

Outre, le matériau actif d'électrode proprement dit, une électrode positive selon l'invention comprend généralement un matériau conducteur électronique, qui est, de préférence, du carbone, sous forme quelconque, tel que le noir de carbone, le noir d'acétylène, le graphite ou le coke, etc.

L'électrode positive comprend, en outre, un liant polymère.

Ledit liant polymère est choisi généralement parmi les polymères fluorés, les élastomères et les composés cellulosiques.

Le polymère fluoré peut être choisi, par exemple, parmi les polymères et copolymères du fluorure de vinylidène et les polymères et copolymères du tétrafluoroéthylène.

L'électrode positive comprend généralement de 75 à 95 % en poids de matériau actif, de 2 à 15 % en poids de matériau conducteur et de 3 à 10 % en poids de liant polymère.

Pour préparer l'électrode positive, on mélange le matériau actif d'électrode, le matériau conducteur et le liant polymère dissout dans un solvant. On applique le mélange, par exemple par enduction sur un substrat en un matériau conducteur, par exemple en aluminium, généralement sous la forme d'une feuille, et on sèche le substrat sur lequel a été appliqué le mélange par chauffage, éventuellement sous vide.

L'invention est relative, en outre, à un accumulateur, tel qu'un accumulateur au lithium, comprenant ladite électrode positive.

Un tel accumulateur comprend généralement, outre ladite électrode positive, une électrode négative, un séparateur et un électrolyte. L'électrode négative peut être réalisée en un matériau choisi généralement parmi le lithium métallique, les alliages de lithium, le carbone, de préférence l'électrode négative est à base de Li₄Ti₅O₁₂

Le séparateur est généralement réalisé en un polymère microporeux, tel que du polypropylène ou....

Enfin, l'électrolyte comprend un solvant et un sel conducteur ; le solvant est généralement choisi parmi le carbonate d'éthylène, le carbonate de propylène, le carbonate de diméthyle, le carbonate de diéthyle, le carbonate d'éthyle et de méthyle, la γ-butyrolactone, le sulfolane, les éthers de dialkyle (en C₁₋₄) d'éthylène glycol ou de polyéthylène glycol, par exemple de diéthylène glycol, triéthylène glycol, tétraéthylène glycol, et leurs mélanges.

Un solvant préféré est un mélange de carbonate d'éthylène et de carbonate de diméthyle.

Le sel conducteur est choisi généralement parmi l'hexafluorophosphate de lithium, le LiPF₆, LiAsF₆, LiBF₄, le trifluorométhanesulfonate, et leurs mélanges.

L'invention concerne enfin un dispositif électrochrome comprenant le composé selon l'invention.

Dans un tel dispositif électrochrome, le composé ou un matériau comprenant le composé selon l'invention est souvent sous forme d'un dépôt sur un substrat, par exemple sur du verre. Le passage de courant, c'est-à-dire l'intercalation/désintercalation du lithium, modifie les propriétés optiques du matériau, par exemple la couleur de celui-ci, il est ainsi possible d'obtenir une vitre dont la couleur varie. Sinon, le fonctionnement est identique à celui de l'accumulateur.

L'invention va maintenant être décrite, en référence aux exemples suivants, donnés à titre illustratif et non limitatif.

### Exemple 1

Dans cet exemple, selon l'invention, on prépare le composé de formule LiFePO₄.

Le complexe nitrilotriacétique du fer (III), noté FeNTA, est tout d'abord synthétisé en portant à ébullition, pendant 1 heure, une solution aqueuse contenant 17 g de sulfate de fer (III), Fe₂(SO₄)₃, et 8g d'acide nitrilotriacétique, N(CH₂CO₂H)₃. Le sel de fer (III), initialement insoluble, se solubilise entièrement vers 60°C (P = 1 atm). A l'ébullition, on commence à voir apparaître le complexe de couleur jaune vif. Au refroidissement, celui-ci précipite au fond du réacteur. Un lavage à l'eau froide permet de le débarrasser des différents sous-produits de la réaction. La poudre est ensuite séchée à l'étuve à 30°C pendant une nuit.

5 g du complexe de fer (III) précédent sont ensuite introduits dans un réacteur autoclave PARR® 4842, avec une solution (800 mL) d'hydrogénophosphate de lithium, Li₂HPO₄, à 0,0256 mol.L⁻¹.

Le réacteur est ensuite scellé hermétiquement. Le milieu réactionnel est alors porté à 200°C, sous agitation. La pression, dans l'autoclave, est fixée par la vapeur d'eau (diagramme d'état P, T de l'eau) et atteint, à cette température de consigne, la valeur de 20 bars. Après 2 heures de chauffage, l'agitation est arrêtée et le mélange est refroidi lentement, soit par inertie du réacteur (durée du refroidissement : 12 heures), soit « par paliers ».

Lorsque le réacteur est revenu à la température ambiante et à la pression atmosphérique, le réacteur peut être ouvert et la poudre récupérée. La poudre est ensuite lavée à l'eau déionisée et séchée sous vide à 60°C.

Le diagramme de diffraction des rayons X réalisé sur la poudre issue de cette synthèse montre, quelque soit le mode de refroidissement utilisé, linéaire par inertie ou par paliers, une absence de pics parasites. Toutes les raies peuvent, en effet, être indexée dans le système orthorhombique de la triphylite, LiFePO₄.

Les analyses physico-chimiques, à savoir le dosage redox, l'analyse élémentaire, et les analyses morphologiques, à savoir microscopie électronique à balayage MEB et granulométrie, du matériau synthétisé permettant d'affirmer qu'il s'agit de LiFePO₄ pur.

On trouve, en effet, moins de 1 % de fer (III) sur l'ensemble du fer présent dans l'échantillon.

Si l'on effectue un refroidissement par inertie du réacteur, de 220°C à l'ambiante en 12 heures, le produit obtenu se présente sous la forme de cylindres d'un diamètre moyen de 20 µm, d'une longueur moyenne de 50 µm (voir la figure 2).

Si l'on effectue un refroidissement par paliers, en abaissant la température de 50°C, toutes les 30 minutes, le produit obtenu se présente sous la forme de cubes d'arête moyenne de 15 µm (voir la figure 3) .

A titre de comparaison, du LiFePO₄ préparé par la voie classique « tout solide », c'est-à-dire dans laquelle les précurseurs solides sont chauffés entre 400°C et 800°C, en dehors de toute présence de solvant, a une teneur en Fe³⁺ supérieure à 5 %, et est constitué de particules « inhomogènes », très peu homogènes, agglomérées (voir figure 1).

### Exemple 2

Dans cet exemple, on fabrique un accumulateur dont l'électrode positive comprend le composé selon l'invention, proposé dans l'exemple 1.

### a) Préparation de l'électrode positive

Le produit obtenu à l'exemple 1 est mélangé à 80 % en masse à du noir d'acétylène (Super P, MMM Carbon, Belgique) (10 %) et du poly(fluorure de vinylidène) (Solef 6020, SOLVAY, Belgique) (10 %) dissous dans de la n-méthyl-pyrrolidone. Le mélange est ensuite enduit sur une feuille d'aluminium, puis séché à 60°C, puis 100°C sous vide.

### b) Fabrication de l'accumulateur

L'électrode positive ainsi réalisée est introduite dans une cellule type « pile bouton » format 2032. L'électrode négative est préparée de la même manière, mais le matériau actif est Li₄Ti₅O_{12.} Le séparateur est constitué d'un film de polypropylène microporeux (Celgard® 3200, Aventis). L'électrolyte utilisé est composé de carbonate d'éthylène, de carbonate de di-méthyle, et d'hexafluorophosphate de lithium (LiPF₆) (Electrolyte Selectipur LP30, Merck, RFA) .

### c)Essai de l'accumulateur

A 25°C, la batterie ainsi constituée opère entre 3 V et 1,0 V et permet l'extraction/insertion réversible de lithium correspondant à environ 100 mAh/g de composé actif positif à un régime de C/2 (charge ou décharge en 2 heures). Autrement dit, sa capacité spécifique à C/2 est de 100 mAh/g. A titre de comparaison, le même accumulateur dans lequel l'électrode positive comprend du LiFePO₄ préparé par la voie de synthèse « tout solide » présente une capacité spécifique à C/2 de 100 mAh/g.

**Tableau I**

| Caractéristiques Etudiées Sur LiFePO₄ | Voies de synthèse tout solide | Procédé selon l'invention (exemple 1) |
|---|---|---|
| % Fe³⁺ dans l'échantillon | > 5 % | < 1 % |
| Morphologie | Particules inhomogènes | Particules homogènes |
| Capacité spécifique à C/2 | 50 mAh/g | 100 mAh/g |

## Revendications

1. Procédé de préparation d'un composé d'insertion d'un métal alcalin, dans lequel on réalise les étapes successives suivantes :
a) on met en contact un complexe organique d'un métal de transition ou d'un mélange de métaux de transition M dans un état d'oxydation supérieur à 2, avec un métal alcalin A sous forme ionique, et avec une espèce de formule H_{b}(XO₄), où X est choisi parmi Si, S, Al, P, Ge, As, Mo, et b vaut de 0 à 5, dans un milieu liquide dans une enceinte fermée ; on porte l'enceinte à une température T qui permet la décomposition du complexe organique dans ledit milieu liquide ;
b) on ramène la température et la pression dans l'enceinte jusqu'à la température ambiante et la pression atmosphérique et l'on récupère le composé d'insertion d'un métal alcalin de formule AMXO₄, dans laquelle M est à l'état d'oxydation +2.

2. Procédé selon la revendication 1, dans lequel le métal M est dans un état d'oxydation de 3 à 5, de préférence, dans un état d'oxydation égal à 3.

3. Procédé selon l'une quelconque des revendications précédentes, dans lequel M est choisi parmi Mn, Fe, Ni, Co et leurs mélanges.

4. Procédé selon l'une quelconque des revendications précédentes, dans lequel le métal alcalin A est choisi parmi Li et Na.

5. Procédé selon l'une quelconque des revendications précédentes, dans lequel le métal alcalin A sous forme ionique est sous la forme d'un sel de métal alcalin AₐH_{b}(XO₄) où a vaut de 1 à 5.

6. Procédé selon l'une quelconque des revendications précédentes, dans lequel X est P.

7. Procédé selon l'une quelconque des revendications 4 à 6, dans lequel le sel de métal alcalin est Li₂HPO₄.

8. Procédé selon l'une quelconque des revendications précédentes, dans lequel le complexe organique comprend le métal M lié à **au moins** un ligand organique choisi parmi les composés de formule : 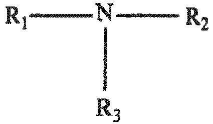 dans laquelle au moins un parmi R₁, R₂ et R₃ comprend au moins un atome d'oxygène.

9. Procédé selon la revendication 8, dans lequel, dans le ligand organique R₁, R₂ et R₃ sont indépendamment choisis parmi les radicaux carboxyalkyle (1-4C), tels que carboxyméthyle, et carboxyéthyle.

10. Procédé selon la revendication 9, dans lequel, le ligand organique est l'acide nitrilotriacétique N(CH₂CO₂H)₃ ou l'acide éthylènedioxyéthylènedinitriletétraacétique (EGTA).

11. Procédé selon l'une quelconque des revendications précédentes, dans lequel le milieu liquide, dans l'étape a), est choisi parmi l'eau ; les solvants organiques, tels que les alcanes liquides, par exemple le dodécane, le tributylphosphate (TBP) ; et leurs mélanges.

12. Procédé selon l'une quelconque des revendications précédentes, dans lequel, à l'issue de l'étape b), le composé est lavé, puis séché, éventuellement sous vide.

13. Procédé selon l'une quelconque des revendications précédentes, dans lequel le complexe organique est préparé dans une étape préalable à l'étape a) en mettant en contact, dans un milieu liquide, un sel du métal M à l'état d'oxydation supérieur à 2 avec un composé organique.

14. Procédé selon la revendication 13, dans lequel le composé organique est choisi parmi les composés de formule : 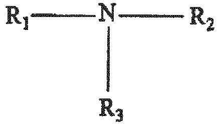 dans laquelle au moins un parmi R₁, R₂ et R₃ comprend au moins un atome d'oxygène.

15. Procédé selon la revendication 14, dans lequel, dans le composé organique, R₁, R₂ et R₃ sont indépendamment choisis parmi les radicaux carboxyalkyle (1-4C), tels que carboxyméthyle, et carboxyéthyle.

16. Procédé selon la revendication 15, dans lequel le composé organique est l'acide nitrilotriacétique N(CH₂CO₂H)₃ ou l'acide éthylènedioxyéthylènedinitriletétraacétique.

17. Procédé selon l'une quelconque des revendications 13 à 16, dans lequel le sel du métal M est choisi parmi les nitrates, sulfates, chlorures, acétates, citrates, carboxylates, du métal M.

18. Procédé selon l'une quelconque des revendications 13 à 17, dans lequel le milieu liquide est choisi parmi l'eau ; les solvants organiques, tels que les alcanes liquides, par exemple le dodécane, le tributylphosphate (TBP) ; et leurs mélanges.

19. Composé d'insertion d'un métal alcalin de formule AM(XO₄), où A est choisi parmi les métaux alcalins, X est choisi parmi Si, S, Al, P, Ge, As, et Mo, et M est à l'état d'oxydation +2, **caractérisé en ce qu'**il présente une teneur en métal (M) à un état d'oxydation supérieur à 2, par exemple en métal M (III), inférieure à 5 % en poids, de préférence inférieure à 1 % en poids ; **en ce qu'**il se présente sous la forme de particules ou grains ; et **en ce que** l'écart à la valeur moyenne de la taille des particules est inférieur à 20 %, de préférence inférieur à 10 %, de préférence encore inférieur à 1 %.

20. Composé selon la revendication 19, dans lequel les particules ont la forme de cylindres, de cubes, ou de polyèdres.

21. Composé selon l'une quelconque des revendications 19 à 20, dans lequel les particules présentent une morphologie parfaitement contrôlée, homogène.

22. Matériau actif d'électrode contenant un ou plusieurs composés selon l'une quelconque des revendications 19 à 21 ou préparés par le procédé selon l'une quelconque des revendications 1 à 18, éventuellement associé(s) à un ou plusieurs autres composés actifs, tels que LiCoO₂, LiNiO₂, les oxydes de manganèse, en particulier, de structure spinelle Li₁₊ₓMn₂₋ₓO₄ (avec 0 ≤ x ≤ 0,33), par exemple LiMn₂O₄, les composés de la famille isotype de l'olivine, tels que Li₁₋ₓFeₓPO₄, par exemple LiFePO₄, les composés de la structure du Nasicon, et les matériaux d'insertion du lithium du type orthosilicate.

23. Electrode positive comprenant le matériau actif selon la revendication 22.

24. Accumulateur comprenant l'électrode selon la revendication 23.

25. Accumulateur selon la revendication 24, comprenant une électrode négative à base de Li₄Ti₅O₁₂.

26. Dispositif électrochrome comprenant le composé selon l'une quelconque des revendications 19 à 21, ou préparé par le procédé selon l'une quelconque des revendications 1 à 18.

## Patentansprüche

1. Verfahren zum Herstellen einer Alkalimetalleinlagerungsverbindung, wobei die nachstehenden, aufeinanderfolgenden Schritte ausgeführt werden:
a) Inkontaktbringen von einem organischen Komplex eines Übergangsmetalls oder eines Gemisches aus Übergangsmetallen M in einem Oxidationszustand von über 2 mit einem Alkalimetall A in ionischer Form und mit einer Spezies der Formel H_{b}(XO₄), worin X ausgewählt ist aus Si, S, Al, P, Ge, As, Mo und worin b 0 bis 5 beträgt, in einem flüssigen Medium in einer geschlossenen Kammer; wobei die Kammer auf eine Temperatur T gebracht wird, die die Zersetzung des organischen Komplexes in dem flüssigen Medium gestattet;
b) Zurückführen der Temperatur und des Drucks in der Kammer auf Umgebungstemperatur bzw. Atmosphärendruck, und Gewinnen der Alkalimetalleinlagerungsverbindung der Formel AMXO₄, in welcher M im Oxidationszustand +2 vorliegt.

2. Verfahren nach Anspruch 1, wobei das Metall M in einem Oxidationszustand von 3 bis 5, vorzugsweise in einem Oxydationszustand gleich 3, vorliegt.

3. Verfahren nach einem der vorangehenden Ansprüche, wobei M ausgewählt ist aus Mn, Fe, Ni, Co und deren Gemischen.

4. Verfahren nach einem der vorangehenden Ansprüche, wobei das Alkalimetall A ausgewählt ist aus Li und Na.

5. Verfahren nach einem der vorangehenden Ansprüche, wobei das Alkalimetall A in ionischer Form in Form eines Alkalimetallsalzes Aₐ,H_{b}(XO₄) vorliegt, wobei a zwischen 1 und 5 beträgt.

6. Verfahren nach einem der vorangehenden Ansprüche, wobei X P ist.

7. Verfahren nach einem der Ansprüche 4 bis 6, wobei das Alkalimetallsalz Li₂HPO4 ist.

8. Verfahren nach einem der vorangehenden Ansprüche, wobei der organische Komplex das Metall M enthält, das mit zumindest einem organischen Liganden verbunden ist, der aus ausgewählt ist aus Verbindungen der Formel 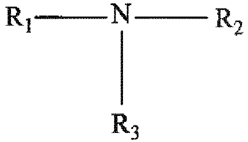 worin zumindest eines aus R₁, R₂ und R₃ zumindest ein Sauerstoffatom enthält.

9. Verfahren nach Anspruch 8, wobei in dem organischen Liganden R₁, R₂ und R₃ unabhängig voneinander aus Carboxyalkyl(Ci - C₄)resten, wie Carboxymethyl und Carboxyethyl, ausgewählt sind.

10. Verfahren nach Anspruch 9, wobei der organische Ligand Nitrilotriessigsäure N(CH₂CO₂H)₃ oder Ethylendioxyethylendinitriltetraessigsäure (EGTA) ist.

11. Verfahren nach einem der vorangehenden Ansprüche, wobei das flüssige Medium in Schritt a) ausgewählt ist aus Wasser; den organischen Lösungsmitteln, wie flüssigen Alkanen, beispielsweise Dodecan, Tributylphosphat (TBP); und deren Gemischen.

12. Verfahren nach einem der vorangehenden Ansprüche, wobei am Ende von Schritt b) die Verbindung gewaschen, dann getrocknet wird, gegebenenfalls unter Vakuum.

13. Verfahren nach einem der vorangehenden Ansprüche, wobei der organische Komplex in einem vor dem Schritt a) erfolgenden Schritt hergestellt wird, indem in einem flüssigen Medium ein Salz des Metalls M im Oxidationszustand höher als 2 mit einer organischen Verbindung in Kontakt gebracht wird.

14. Verfahren nach Anspruch 13, wobei die organische Verbindung ausgewählt ist aus Verbindungen der Formel 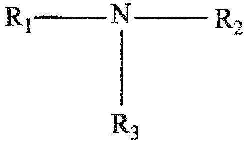 worin zumindest eines aus R₁, R₂ und R₃ zumindest ein Sauerstoffatom enthält.

15. Verfahren nach Anspruch 14, wobei in der organischen Verbindung R₁, R₂ und R₃ unabhängig voneinander aus Carboxyalkyl(C₁ - C₄)resten, wie Carboxymethyl und Carboxyethyl, ausgewählt sind.

16. Verfahren nach Anspruch 15, wobei die organische Verbindung Nitrilotriessigsäure N(CH₂CO₂H)₃ oder Ethylendioxyethylendinitriltetraessigsäure ist.

17. Verfahren nach einem der Ansprüche 13 bis 16, wobei das Salz des Metalls M ausgewählt ist aus Nitraten, Sulfaten, Chloriden, Acetaten, Citraten, Carboxylaten des Metalls M.

18. Verfahren nach einem der Ansprüche 13 bis 17, wobei das flüssige Medium ausgewählt ist aus Wasser; den organischen Lösungsmitteln, wie flüssigen Alkanen, beispielsweise Dodecan, Tributylphosphat (TBP); und deren Gemischen.

19. Alkalimetalleinlagerungsverbindung der Formel AM(XO₄), worin A ausgewählt ist aus den Alkalimetallen, X ausgewählt ist aus Si, S, Al, P, Ge, As, und Mo, und worin M im Oxidationszustand +2 vorliegt, **dadurch gekennzeichnet, dass** sie einen Gehalt an Metall (M) im Oxidationszustand von über 2, beispielsweise aus Metall M (III), von unter 5 Gew.-%, vorzugsweise von unter 1 Gew.-% aufweist; dass sie in Form von Teilchen oder Körnchen vorliegt; und dass die Abweichung der Teilchengröße von dem Mittelwert unter 20 %, vorzugsweise unter 10 %, noch bevorzugter unter 1 % liegt.

20. Verbindung nach Anspruch 19, wobei die Teilchen zylinder-, würfel- oder polyederförmig sind.

21. Verbindung nach einem der Ansprüche 19 bis 20, wobei die Teilchen eine völlig kontrollierte, homogene Morphologie aufweisen.

22. Aktives Elektrodenmaterial, enthaltend eine oder mehrere Verbindungen nach einem der Ansprüche 19 bis 21 oder hergestellt mit dem Verfahren nach einem der Ansprüche 1 bis 18, gegebenenfalls assoziiert mit einem oder mehreren weiteren aktiven Verbindungen, wie LiCoO₂, LiNiO₂, Manganoxiden, insbesondere mit Spinell-Struktur Li₁₊ₓMn₂₋ₓO₄ (mit 0 ≤ x ≤ 0,33), beispielsweise LiMn₂O₄, den Verbindungen der Isotyp-Familie von Olivin, wie etwa Li₁₋ₓFeₓPO₄, beispielsweise LiFePO₄, den Verbindungen der Nasicon-Struktur und den Lithium-Einlagerungsmaterialien vom Typ Orthosilicat.

23. Positive Elektrode, enthaltend das aktive Material nach Anspruch 22.

24. Akkumulator enthaltend die Elektrode nach Anspruch 23.

25. Akkumulator nach Anspruch 24, enthaltend eine negative Elektrode auf Basis von Li₄Ti₅O₁₂.

26. Elektrochrome Vorrichtung, enthaltend die Verbindung nach einem der Ansprüche 19 bis 21, oder hergestellt mit dem Verfahren nach einem der Ansprüche 1 bis 18.

## Claims

1. Process for the preparation of an insertion compound of an alkali metal in which the following successive steps are carried out:
a) an organic complex of a transition metal or of a mixture of transition metals M in an oxidation state of greater than 2 is brought into contact with an alkali metal A in the ionic form and with a species of formula H_{b}(XO₄), where X is chosen from Si, S, Al, P, Ge, As, Mo, and b has a value from 0 to 5, in a liquid medium in a closed chamber; the chamber is brought to a temperature T which makes possible the decomposition of the organic complex in said liquid medium;
b) the temperature and the pressure in the chamber are brought back to ambient temperature and atmospheric pressure and the insertion compound of an alkali metal of formula AMXO₄, in which M is in the +2 oxidation state, is recovered.

2. Process according to Claim 1, in which the metal M is in an oxidation state of 3 to 5, preferably in an oxidation state equal to 3.

3. Process according to any one of the preceding claims, in which M is chosen from Mn, Fe, Ni, Co and their mixtures.

4. Process according to any one of the preceding claims, in which the alkali metal A is chosen from Li and Na.

5. Process according to any one of the preceding claims, in which the alkali metal A in the ionic form is in the form of an alkali metal salt AₐH_{b}(XO₄) where a is from 1 to 5.

6. Process according to any one of the preceding claims, in which X is P.

7. Process according to any one of Claims 4 to 6, in which the alkali metal salt is Li₂HPO₄.

8. Process according to any one of the preceding claims, in which the organic complex comprises the metal M bonded to at least one organic ligand chosen from the compounds of formula: 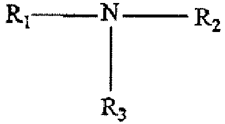 in which at least one among R₁, R₂ and R₃ comprises at least one oxygen atom.

9. Process according to Claim 8, in which, in the organic ligand, R₁, R₂ and R₃ are chosen independently from carboxyalkyl (1-4C) radicals, such as carboxymethyl and carboxyethyl.

10. Process according to Claim 9, in which the organic ligand is nitrilotriacetic acid N(CH₂CO₂H)₃ or ethylenedioxyethylenedinitriletetraacetic acid (EGTA).

11. Process according to any one of the preceding claims, in which the liquid medium, in step a), is chosen from water; organic solvents, such as liquid alkanes, for example dodecane, or tributyl phosphate (TBP); and their mixtures.

12. Process according to any one of the preceding claims, in which, at the end of step b), the compound is washed and then dried, optionally under vacuum.

13. Process according to any one of the preceding claims, in which the organic complex is prepared in a step prior to step a) by bringing a salt of the metal M, in the oxidation state greater than 2, into contact with an organic compound, in a liquid medium.

14. Process according to Claim 13, in which the organic compound is chosen from the compounds of formula: 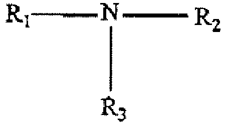 in which at least one among R₁, R₂ and R₃ comprises at least one oxygen atom.

15. Process according to Claim 14, in which, in the organic compound, R₁, R₂ and R₃ are chosen independently from carboxyalkyl (1-4C) radicals, such as carboxymethyl and carboxyethyl.

16. Process according to Claim 15, in which the organic compound is nitrilotriacetic acid N(CH₂CO₂H)₃ or ethylenedioxyethylenedinitriletetraacetic acid.

17. Process according to any one of Claims 13 to 16, in which the salt of the metal M is chosen from nitrates, sulphates, chlorides, acetates, citrates or carboxylates of the metal M.

18. Process according to any one of Claims 13 to 17, in which the liquid medium is chosen from water; organic solvents, such as liquid alkanes, for example dodecane, or tributyl phosphate (TBP); and their mixtures.

19. Insertion compound of an alkali metal of formula AM(XO₄) where A is chosen from alkali metals, X is chosen from Si, S, Al, P, Ge, As and Mo, and M is in the +2 oxidation state, **characterized in that** it exhibits a content of metal (M) at an oxidation state of greater than 2, for example of metal M(III), of less than 5% by weight, preferably of less than 1% by weight; **in that** it is present in the form of particles or grains; and **in that** the deviation from the mean value of the size of the particles is less than 20%, preferably less than 10%, more preferably less than 1%.

20. Compound according to Claim 19, in which the particles have the shape of cylinders, cubes or polyhedra.

21. Compound according to any one of Claims 19 to 20, in which the particles exhibit a fully controlled, homogeneous, morphology.

22. Electrode active material containing one or more compound(s) according to any one of Claims 19 to 21 or prepared by the process according to any one of Claims 1 to 18, optionally in combination with one or more other active compound(s), such as LiCoO₂, LiNiO₂, manganese oxides, in particular with the spinel structure Li₁₊ₓMn₂₋ₓO₄ (with 0 ≤ x ≤ 0.33), for example LiMn₂O₄, compounds of the family isotypic with olivine, such as Li₁₋ₓFePO₄, for example LiFePO₄, compounds with the Nasicon structure and the insertion materials of lithium of the orthosilicate type.

23. Positive electrode comprising the active material according to Claim 22.

24. Battery comprising the electrode according to Claim 23.

25. Battery according to Claim 24, comprising a negative electrode based on Li₄Ti₅O_{12.}

26. Electrochromic device comprising the compound according to any one of Claims 19 to 23 or prepared by the process according to any one of Claims 1 to 18.
